# DEMANDE DE BREVET EUROPEEN

(11) **EP 1 926 191 A1**
(43) Date de publication de la demande: **28.05.2008**
(21) Numéro de dépôt: 07291324.7
(22) Date de dépôt: 05.11.2007
(51) Int. Cl.: H02G 3/10

(54) **Boîtier d'appareillage électrique, à face inclinée comportant une entrée de conduit oblongue permettant le pivotement du conduit**

(30) Priorité: 22.11.2006 FR 0610243
(71) Demandeur: Capri-Codec SAS, 41600 Nouan-Le-Fuzelier (FR)
(72) Inventeur: Dameme, Jimmy, 41210 Saint-Viatre (FR); Philippe, Marc, 41600 Nouan-Le-Fuzelier (FR)
(74) Mandataire: Bertrand, Didier

(57) **Abrégé**

Ce boîtier d'appareillage électrique destiné à être placé dans un trou pratiqué dans une cloison sèche, présente une paroi oblique 10 dans laquelle est formée une entrée de conduit elliptique 11 destinée à fixer l'extrémité d'un conduit annelé circulaire 4 par deux points A, diamétralement opposés sur un diamètre parallèle à la cloison, d'écartement minimum, grâce à quoi il se forme un axe de pivotement pour le conduit 4 qui peut alors basculer lors de la mise en place du boîtier 1 entre deux positions extrêmes perpendiculaire puis parallèle à la cloison.

## Description

La présente invention concerne un boîtier pour appareillage électrique destiné à être placé dans un trou pratiqué dans une cloison sèche, notamment en plâtre. L'électricien de chantier doit récupérer les extrémités des conduits passés entre les parois de la cloison pour les fixer à des entrées de conduits formées sur le boîtier. Compte tenu du peu d'espace entre les parois de la cloison, les positions des conduits sont assez contraintes une fois qu'ils sont fixés sur le boîtier, et la mise en place d'un tel boîtier peut s'avérer difficile.

Un boîtier d'appareillage électrique classique pour cloison sèche comprend un fond et une jupe cylindrique à rebord, ainsi qu'un dispositif de retenue de boîtier destiné à retenir le boîtier dans un trou de la cloison sèche. Des entrées de conduits prédéfinies par des contours frangibles sont prévues dans des parois du boîtier, à cheval sur le fond et sur la jupe, comme connu par exemple par les documents FR 2 766 025 ou FR 2 839 818. Cela permet à l'électricien sur le chantier d'introduire le conduit dans la partie d'entrée située au fond du boîtier, puis, quand le boîtier est enfoncé dans le trou, le conduit peut pivoter et passer dans la partie d'entrée située sur la jupe. Cela facilite donc grandement la mise en place du boîtier et diminue les contraintes portant sur les conduits. Néanmoins, une telle entrée de conduit, une fois ses opercules défoncés, est ouverte sur une surface considérable, nettement supérieure à celle occupée par la section du conduit et n'est donc pas étanche du tout à l'air et aux poussières comme on le souhaite aujourd'hui dans ce type d'utilisation de boîtier, afin d'éviter les passages intempestifs d'air et de poussière au niveau des appareillages (interrupteurs par exemple) dans les cloisons des bâtiments.

Il a été proposé de prévoir des boîtiers comportant au moins une paroi inclinée à 45° dans laquelle est formée au moins une entrée de conduit. Par son placement à 45°, cette entrée est censée présenter les mêmes avantages que l'entrée connue s'étendant sur deux surfaces perpendiculaires, tout en préservant l'étanchéité à l'air et aux poussières. Si ce dernier point est effectivement acquis, en revanche, le premier ne l'est pas et la mise en place du boîtier se fait toujours avec une certaine difficulté et avec des contraintes pesant sur les conduits.

Le document EP 1 467 454, sur lequel est fondé le préambule de la revendication 1 annexée, fait connaître un perfectionnement selon lequel l'entrée de conduit inclinée est montée sur un manchon souple. Malheureusement, un tel perfectionnement complique et renchérit la fabrication du boîtier.

Le but de l'invention est de remédier à ce problème.

L'invention atteint son but grâce aux caractéristiques énoncées dans la revendication 1 annexée. Il a en effet été découvert selon l'invention que grâce à ses deux points d'écartement minimal nominal qui pincent deux points de la périphérie du conduit, il se forme un axe de pivotement pour le conduit qui peut alors basculer entre deux positions extrêmes, respectivement plutôt perpendiculaire à la cloison et plutôt parallèle à la cloison, ce basculement étant possible grâce au supplément d'écartement entre les autres points diamétralement opposés du contour de l'entrée.

Les deux points rapprochés pourraient être formés par des saillies dirigées radialement vers l'intérieur d'un contour d'entrée par ailleurs régulier et, par exemple, circulaire.

Néanmoins, avantageusement, l'entrée à une forme sensiblement elliptique, le petit axe de l'ellipse étant défini entre les deux points d'écartement minimal. Cette forme permet en effet de minimiser les pertes d'étanchéité au niveau de l'entrée une fois le conduit mis en place. Bien que de forme elliptique (ou ovale) avec un grand axe supérieur au petit axe, le rapport entre les deux axes reste très voisin de 1, l'essentiel étant seulement d'offrir les deux appuis latéraux qui vont permettre le basculement du conduit ; un allongement du grand axe au-delà de ce résultat entraîne l'inconvénient d'augmenter l'ouverture non obturée par le conduit et donc de nuire à l'étanchéité finale de la boîte.

À cet égard, il convient de noter que la solution de l'invention n'a rien à voir avec le document JP 2003 079023 qui fait connaître un boîtier à paroi droite et non oblique, dans laquelle l'entrée de conduit annelée peut être ovalisée, dans le but de pouvoir loger des conduits de tailles légèrement différentes. Il n'est pas suggéré selon ce document de pouvoir donner deux orientations différentes à un conduit annelé, et de fait cela serait sans intérêt dans une paroi non oblique. L'invention tire son intérêt de la découverte que dans une paroi oblique de boîtier, dont l'entrée est elliptique ou ovalisée, on peut orienter le conduit annelé selon deux directions très différentes (et sensiblement perpendiculaires si la paroi oblique est inclinée à 45°).

D'autres caractéristiques et avantages de l'invention apparaîtront à la lecture de la description suivante, en référence aux dessins annexés sur lesquels :

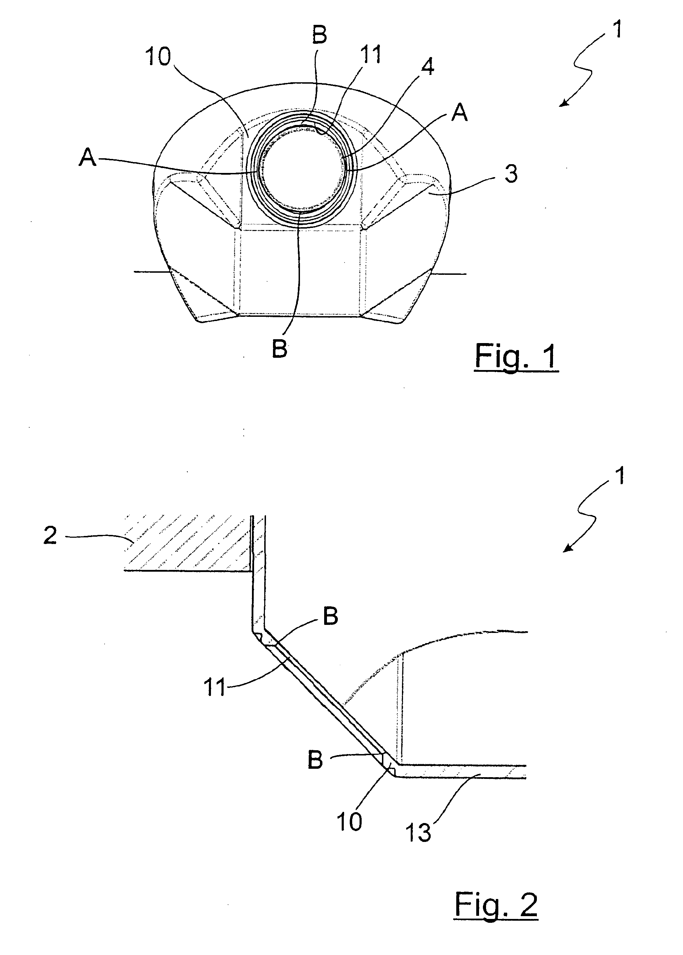

- la figure 1 représente en vue de face la face inclinée d'un boîtier conforme à l'invention,
- la figure 2 représente une coupe verticale à travers ladite face inclinée montrant l'ouverture qui y est pratiquée,
- les figures 3 à 5 représentent schématiquement trois étapes consécutives de mise en place des conduits dans un boîtier conforme à l'invention et d'introduction du boîtier dans un trou de cloison sèche.
- la figure 6 représente en coupe verticale l'ouverture de la figure 2 avec le conduit annelé qu'elle fixe, la coupe montrant le grand diamètre de l'ouverture,
- la figure 7 représente en coupe horizontale l'ouverture de la figure 2 avec le conduit annelé qu'elle fixe, la coupe montrant le petit diamètre de l'ouverture.

Le boîtier 1 est destiné à être encastré dans la paroi avant 2 d'une cloison sèche comportant également une cloison arrière 2' parallèle à la paroi avant 2 et dans l'intervalle desquelles sont situés des conduits annelés 4 destinés au passage de fils électriques. Une extrémité des conduits 4 débouche près d'un trou formé dans la paroi 2 et doit être fixée dans le boîtier 1 en introduisant à force ladite extrémité dans une ouverture 11 prévue dans une paroi 10 inclinée, de préférence sensiblement à 45°, par rapport à la base 12 et au fond 13 du boîtier 1.

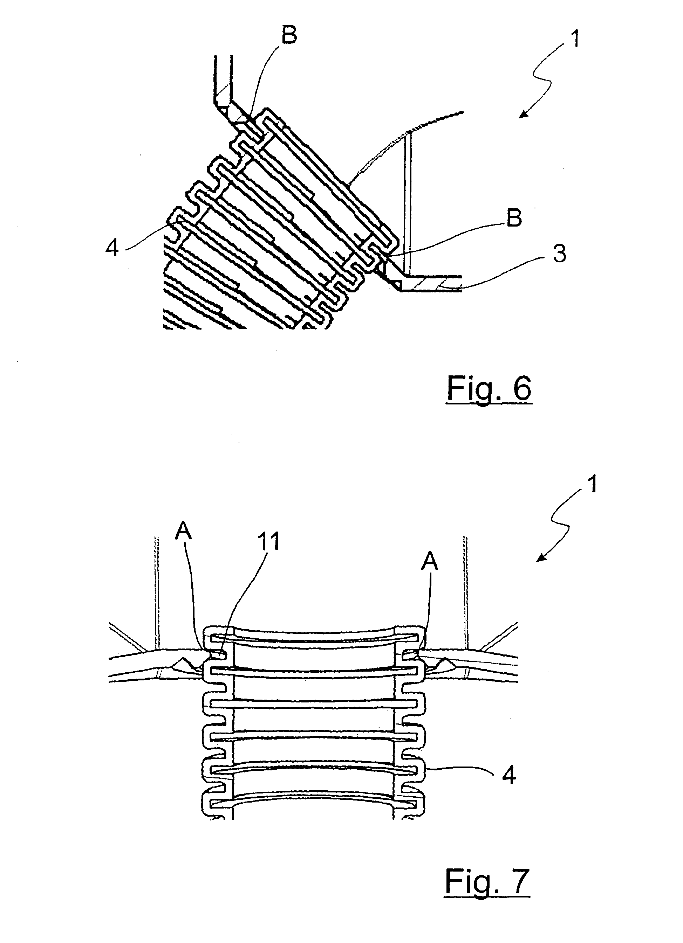

L'ouverture 11 n'est pas circulaire mais sensiblement elliptique de sorte qu'elle présente un diamètre horizontal AA plus petit que n'importe quel autre diamètre et un diamètre BB selon un plan vertical qui est le plus grand diamètre du contour. Le diamètre AA est légèrement plus petit que le diamètre nominal extérieur du conduit annelé A (c'est-à-dire le diamètre au niveau des crêtes du conduit 4, cf. figure 7) de sorte que le conduit introduit dans l'ouverture 11 est retenu au moins au niveau des points les plus rapprochés A et que le diamètre AA peut servir de pivot pour le conduit 4 ; le conduit 4 est retenu dans l'ouverture 11 au niveau d'un creux de sa surface annelée. Au contraire, le diamètre BB est plus grand que le diamètre nominal extérieur du conduit 4 (cf. figure 6) de sorte que le conduit n'est pas retenu par ces points B ni les points qui s'étendent entre B et le voisinage immédiat des points A. De la sorte l'extrémité du conduit 4 introduite dans l'ouverture 11 peut pivoter autour du diamètre AA parallèle à la base du boîtier 1 et à la paroi 2.

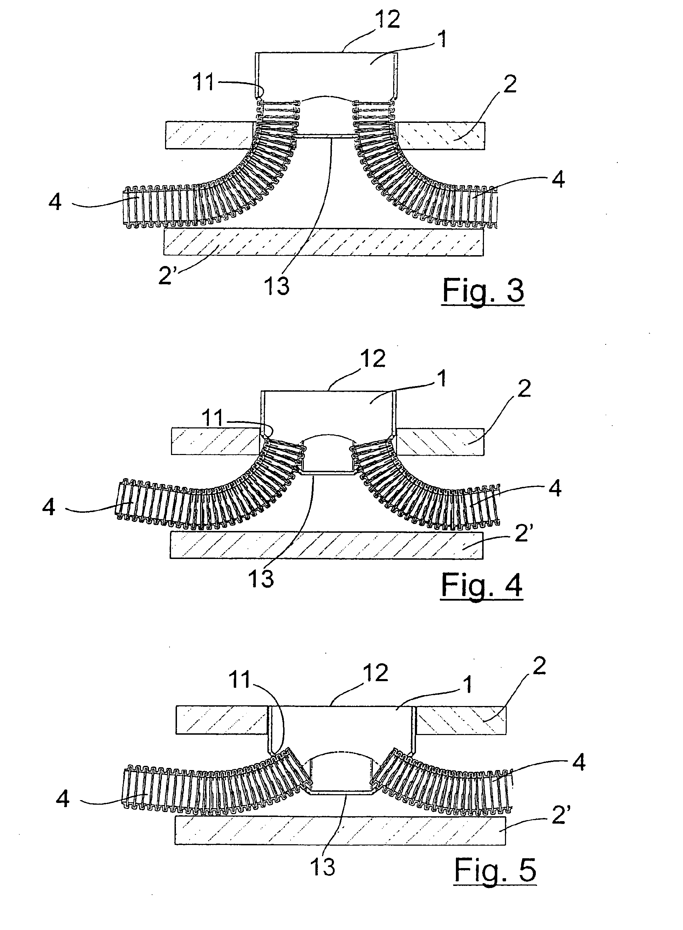

Grâce à cette possibilité de pivotement, lorsque l'électricien de chantier va installer le boîtier 1, il approche celui-ci de la paroi 2 et peut fixer la ou les extrémités de conduit 4 dans la ou les ouvertures inclinées 11 du boîtier, en maintenant ces extrémités dans une position sensiblement perpendiculaire à la base du boîtier 1 ou à la paroi 2 (figure 3). Lorsqu'il enfonce le boîtier 1 dans le trou de la paroi 2 (figure 4), le ou les conduits 4 qui sont dans un espace limité entre les deux parois 2, 2' exercent un couple de basculement au niveau de la retenue de l'extrémité de conduit 4 dans l'ouverture 11, ce qui amorce le basculement du conduit 4 autour du diamètre AA et le fait passer, en fin d'enfoncement (figure 5), dans une position plus proche de l'horizontale.

La différence de longueur entre BB et AA permet le basculement du conduit mais peut être maintenue suffisamment petite pour que la perte d'étanchéité à l'air autour du conduit résultant du jeu entre le conduit 4 et la région autour des points B soit négligeable, d'autant que, en fin de positionnement tel que représenté en figure 5, la position proche de l'horizontale de l'extrémité du conduit 4 fait que le contact du conduit 4 et de l'ouverture 11 se fait selon une section elliptique correspondant avantageusement à la forme donnée à l'ouverture 11, de sorte qu'il n'y a sensiblement pas de passage d'air autour du conduit 4 ainsi positionné.

## Revendications

1. Boîtier (1) d'appareillage électrique destiné à être placé dans un trou pratiqué dans une cloison sèche (2), le boîtier (1) présentant au moins une paroi oblique (10) dans laquelle est formée au moins une entrée (11) de conduit sensiblement arrondie destinée à fixer l'extrémité d'un conduit annelé circulaire (4), **caractérisé en ce que** l'entrée (11) comporte deux points rapprochés (A), diamétralement opposés sur un diamètre parallèle à la cloison, d'écartement minimum, les autres points diamétralement opposés sur d'autres diamètres étant plus écartés.

2. Boîtier selon la revendication 1, **caractérisé en ce que** l'écartement des points rapprochés (A) est légèrement inférieur au diamètre extérieur du conduit à fixer (4).

3. Boîtier selon la revendication 1 ou 2, **caractérisé en ce que** l'entrée (11) à une forme sensiblement elliptique, le petit axe de l'ellipse étant défini entre les deux points rapprochés (A).

4. Boîtier selon l'une quelconque des revendications 1 à 3, **caractérisée en ce que** la paroi oblique (10) est inclinée sensiblement à 45° par rapport au fond (13) du boîtier.
